# FASCICULE DE BREVET EUROPEEN

(11) **EP 4 330 006 B1**
(45) Date de publication et mention de la délivrance du brevet: **14.08.2024**
(21) Numéro de dépôt: 22730957.2
(22) Date de dépôt: 16.05.2022
(51) Int. Cl.: B29C 48/28, B29C 48/00, B29C 48/08, B65H 18/10, B65H 20/34

(54) **PROCÉDÉ ET INSTALLATION PERFECTIONNÉS D'ENROULAGE EN CONTINU DE BANDELETTES DE GOMME POUR FORMER DES GALETTES**
VERBESSERTES VERFAHREN UND VORRICHTUNG ZUM KONTINUIERLICHEN AUFWICKELN VON GUMMISTREIFEN ZU SPULEN
IMPROVED METHOD AND APPARATUS FOR CONTINUOUSLY WINDING RUBBER STRIPS TO FORM REELS

(30) Priorité: 27.07.2021 FR 2108149
(43) Date de publication de la demande: 06.03.2024
(73) Titulaire: Spoolex, 42230 Roche La Moliere (FR)
(72) Inventeur: LASSALLE, Luc, 42100 Saint-Étienne (FR); PAULET, Guillaume, 43240 Saint-Just-Malmont (FR)
(74) Mandataire: Cabinet Laurent & Charras
(86) Numéro de dépôt international: PCT/FR2022/050927
(87) Numéro de publication internationale: WO 2023/007062

(56) Documents cités:
- FR-A1- 3 062 807
- FR-A1- 3 062 808

## Description

### Domaine technique

L'invention concerne le domaine technique de la fabrication de galettes de matériau caoutchouteux, notamment de gomme, utilisées pour la fabrication d'un pneumatique par exemple.

L'invention concerne notamment un procédé et une installation d'enroulage en continu de bandelettes de gomme pour former de telles galettes, à partir d'une nappe de gomme extraite en continu d'une extrudeuse. A la différence d'un enroulage de nappes qui prend la forme d'une bobine, l'enroulage de bandelettes prend la forme de galettes, du fait de la faible largeur des bandelettes de gomme enroulées.

Par « gomme », on entend une pâte à base de caoutchouc, utilisée dans la fabrication d'un pneumatique. Cette pâte à base de caoutchouc peut intégrer un élément de renfort, tel que du tissu de la corde ou du câble, ou tout autre composant ou élément structurel.

### Art antérieur

Dans l'état actuel de la technique, il est connu de fabriquer une nappe de gomme par l'intermédiaire d'une extrudeuse. En sortie de l'extrudeuse, la nappe est acheminée par l'intermédiaire de rouleaux de transitique et de refroidissement vers un premier module au niveau duquel la nappe refroidie est déposée sur un film support, appelé « liner », en matière plastique ou textile, puis est en enroulée en bobine d'environ 1600 mm de largeur.

En pratique, lorsque la bobine de gomme est terminée, l'extrudeuse est stoppée, la nappe est coupée transversalement et la bobine est déchargée puis évacuée vers d'autres machines pour des opérations de déroulage de la bobine, de découpes de la nappe en bandelettes, et d'enroulage des bandelettes en galettes.

La configuration actuelle est contraignante et présente plusieurs inconvénients, notamment liés aux diverses manipulations des bobines, aux diverses opérations d'enroulage et de déroulage, au stockage et à la conservation des bobines, à la perte de rendement liée à l'arrêt de l'extrudeuse, etc...

Le Demandeur a déjà tenté de remédier à ces inconvénients avec le brevet européen délivré n° EP 3583060 divulguant une installation et un procédé d'enroulage en continu de bandelettes de gomme pour former des galettes, à partir d'une nappe de gomme extraite en continu d'une extrudeuse.

Le procédé décrit dans ce document comprend des étapes consistant à :
- faire défiler en continu et refroidir la nappe en sortie de l'extrudeuse par l'intermédiaire de rouleaux de transitique et de refroidissement ;
- déposer en continu la nappe refroidie sur un film support déroulé en continu pour former un complexe ;
- faire défiler le complexe dans un accumulateur ;
- en sortie de l'accumulateur, découper le complexe dans sa largeur en une pluralité de bandelettes ;
- enrouler les bandelettes à une vitesse initiale, chacune autour d'un support pour former des galettes ;
- lorsque les galettes sont terminées, stopper l'enroulage des bandelettes et faire s'accumuler dans l'accumulateur le complexe en provenance de l'extrudeuse ;
- pendant que le complexe s'accumule, approvisionner des supports vides, découper transversalement les bandelettes en amont des galettes et rattacher l'extrémité libre des bandelettes auxdits supports vides ;
- simultanément, finir l'enroulage de l'extrémité libre des bandelettes autour des galettes, évacuer automatiquement lesdites galettes, et redémarrer l'enroulage de chacune des bandelettes autour des supports vides à une vitesse supérieure à la vitesse initiale jusqu'à décharger complètement l'accumulateur, puis reprendre l'enroulage à la vitesse initiale.

Ce procédé, et l'installation correspondante, donnent entière satisfaction pour l'enroulage en continu de bandelettes de gomme pour former des galettes, à partir d'une nappe de gomme extraite en continu d'une extrudeuse.

Cependant, après dépôt de la nappe sur le film support, appelé « liner », en matière plastique ou textile, l'ensemble est refendu en bande étroite de 15 à 50 mm par exemple, et est ensuite enroulé en galettes d'environ 800 mm de diamètre.

Ceci engendre plusieurs inconvénients, tels que celui de devoir manipuler, découper, et consommer des bobines de liner, qui deviendra un déchet à terme.

### Exposé de l'invention

L'un des buts de l'invention est donc de remédier aux problèmes précités, et de fournir un procédé et une installation d'enroulage en continu de bandelettes de gomme, notamment utilisées dans la fabrication d'un pneumatique, pour former des galettes, à partir d'une nappe de gomme extraite en continu d'une extrudeuse, qui soit plus ergonomique et écologique.

A cet effet, il a été mis au point un procédé remarquable en ce qu'il comprend des étapes consistant à :
- déposer en continu la nappe en sortie d'extrudeuse sur une bande transporteuse circulant en boucle fermée dans un accumulateur, l'accumulateur comprenant une première zone d'accumulation/déchargement de la bande transporteuse seule, et une deuxième zone de déchargement/accumulation de la bande transporteuse recevant la nappe ;
- en sortie de l'accumulateur, découper la nappe dans sa largeur en une pluralité de bandelettes de gomme ;
- dérouler en continu des galettes de bandelettes de film support, de largeurs correspondantes à celles des bandelettes de gomme ;
- positionner chaque bandelette de gomme sur une bandelette de film support et les enrouler ensemble, à une vitesse initiale, autour d'un support pour former des galettes de gomme ;
- pendant le temps de formation des galettes, approvisionner des supports vides destinés à recevoir des galettes de gomme, et approvisionner des galettes pleines de bandelettes de film support, et attacher les bandelettes de film support sur les supports vides destinés à recevoir des galettes de gomme ;
- lorsque les galettes de gomme sont terminées, stopper l'enroulage des bandelettes de gomme et des bandelettes de film support, décharger la bande transporteuse seule dans la première zone de l'accumulateur, et accumuler simultanément la bande transporteuse recevant la nappe dans la deuxième zone de l'accumulateur ;
- pendant que la bande transporteuse recevant la nappe s'accumule, découper transversalement les bandelettes de gomme en amont des galettes de gomme, et rattacher aux supports vides les bandelettes de gomme provenant de l'extrudeuse ;
- simultanément, finir l'enroulage de l'extrémité libre des bandelettes de gomme et des bandelettes de film support autour des galettes de gomme, évacuer lesdites galettes de gomme, et redémarrer l'enroulage de chacune des bandelettes de gomme et des bandelettes de film support autour des supports vides à une vitesse supérieure à la vitesse initiale jusqu'à décharger la bande transporteuse recevant la nappe dans la deuxième zone l'accumulateur et accumuler simultanément la bande transporteuse seule dans la première zone de l'accumulateur, puis reprendre l'enroulage à la vitesse initiale.

De cette manière, l'invention permet de fabriquer directement et en continu des galettes de gomme à partir d'une nappe en sortie d'extrudeuse. L'invention permet de s'affranchir des étapes d'enroulage, de manutention, de stockage, et de déroulage de bobines de film support, ce qui rend le procédé plus ergonomique. Le rendement est optimal puisque l'extrudeuse produit une nappe en continu, sans arrêt, et que les galettes de bandelettes de gomme sont formées en continu.

En d'autres termes, l'invention permet de transférer la nappe de gomme entre une extrudeuse et une machine de refendage et d'enroulage en continu sans utiliser de film support pendant toute la phase de transitique. Le film support est ensuite inséré au moment du ré-enroulage des bandelettes de gomme après la coupe. Le film support n'est pas découpé et peut être réutilisé à terme, ce qui rend le procédé plus écologique.

Selon une forme de réalisation particulière, les galettes de gomme sont évacuées et remplacées par des supports vides, automatiquement et par l'intermédiaire d'un manipulateur, ce qui rend davantage ergonomique le procédé de l'invention. Ces opérations sont effectuées en temps masqué sur l'enroulage des galettes de bandelettes de gomme en cours.

De la même manière, lorsque les bandelettes de film support sont découpées transversalement, les galettes vides de bandelettes de film support sont évacuées automatiquement et remplacées par des nouvelles galettes de film support pleines, de préférence par l'intermédiaire d'un manipulateur. Ces opérations sont effectuées en temps masqué sur l'enroulage des galettes de bandelettes de gomme en cours.

L'invention vise à protéger également une installation pour la mise en oeuvre du procédé décrit ci-avant, et comprenant successivement :
- un accumulateur à bande transporteuse circulant en boucle fermée au travers duquel la nappe est destinée à défiler en continu en sortie de l'extrudeuse, l'accumulateur comprenant une première zone d'accumulation/déchargement de la bande transporteuse seule, et une deuxième zone de déchargement/accumulation de la bande transporteuse recevant la nappe ;
- un module de découpe comprenant des moyens de coupe de la nappe dans sa largeur et en une pluralité de bandelettes de gomme ;
- un module d'enroulage des bandelettes comprenant :
   * des barres de dévidage de galettes de bandelettes de film support ;
   * une pluralité de supports montés sur des barres entrainées en rotation et autour desquels les bandelettes de gomme positionnées sur les bandelettes de film support sont enroulées ensemble pour former les galettes de gomme ;
   * des capteurs détectant que les galettes de gomme sont formées, assujettis à des moyens d'évacuation des galettes de gomme formées ;
   * une lame de coupe transversale des bandelettes de gomme en amont des galettes de gomme formées ;
   * des moyens d'approvisionnement de supports vides et d'enroulage des bandelettes de gomme découpées et des bandelettes de film support autour desdits supports vides.

Toujours selon l'invention, l'installation comprend des moyens pour assujettir la vitesse de rotation des supports pour l'enroulage des bandelettes de gomme et des bandelettes de film support à l'accumulateur de sorte que lorsque la rotation des supports est arrêtée ou ralentie, le bande transporteuse seule est déchargée dans la première zone de l'accumulateur et la bande transporteuse recevant la nappe s'accumule simultanément dans l'accumulateur, et lorsque l'enroulage des nouvelles galettes de gomme débute, la vitesse de rotation est accélérée pour décharger la bande transporteuse recevant la nappe dans la deuxième zone l'accumulateur et accumuler simultanément la bande transporteuse seule dans la première zone de l'accumulateur, puis est ralentie jusqu'à une vitesse initiale.

De préférence, l'installation comprend des moyens d'évacuation et d'approvisionnement automatique de galettes de bandelettes de film support.

Selon une forme de réalisation particulière, les moyens d'approvisionnement de supports vides et d'enroulage des bandelettes de gomme découpées et des bandelettes de film support autour desdits supports vides comprennent un flasque rotatif duquel font saillie quatre barres régulièrement réparties autour du flasque, le flasque étant apte à être entraîné en rotation pour faire pivoter les barres de sorte à positionner successivement :
- devant un poste d'enroulage, une première barre sur laquelle sont destinées à s'enrouler des bandelettes de gomme positionnées sur des bandelettes de film support ;
- devant un poste de déroulage, une deuxième barre recevant des galettes de bandelettes de film support ;
- devant un premier poste d'évacuation/chargement, une troisième barre sur laquelle sont enroulées des galettes de bandelettes de gomme positionnées sur des bandelettes de film support pour évacuation et remplacement par des supports vides ;
- devant un deuxième poste d'évacuation /chargement, une quatrième barre recevant des supports vides pour évacuation et remplacement par des galettes de bandelettes de film support.

### Brève description des dessins

D'autres caractéristiques et avantages de l'invention ressortiront clairement de la description qui en est réalisée ci-après, à titre indicatif et nullement limitatif, en référence aux figures annexées dans lesquelles :
[Fig. 1] est une vue en perspective d'une installation d'enroulage en continu de bandelettes de gomme selon l'invention.
[Fig. 2] illustre en perspective un accumulateur à bande transporteuse mis en oeuvre dans l'installation, et en phase repos.
[Fig. 3] est une vue similaire à celle de la figure 2, l'accumulateur étant en phase d'accumulation de la nappe de gamme.
[Fig. 4] illustre la sortie de l'accumulateur et la séparation de la nappe de gomme et de la bande transporteuse.
[Fig. 5] est une vue en perspective illustrant un module de découpe de la nappe en une pluralité de bandelettes de gomme.
[Fig. 6] est une vue similaire à celle de la figure 5, vue sous un autre angle, et illustrant les moyens de coupe de la nappe dans sa largeur une pluralité de bandelettes de gomme.
[Fig. 7] est une perspective des modules d'enroulage de bandelettes de gomme en galettes.
[Fig. 8] est une vue similaire à celle de la figure 7, vue en coupe le long des barres d'enroulage du module d'enroulage.
[Fig. 9] est une vue de détail d'un module d'enroulage, illustrant les moyens de coupe transversale des bandelettes de gomme.
[Fig. 10] est une vue illustrant les moyens d'évacuation des galettes de gomme pleines et des supports de liner vides.

### Description détaillée de l'invention

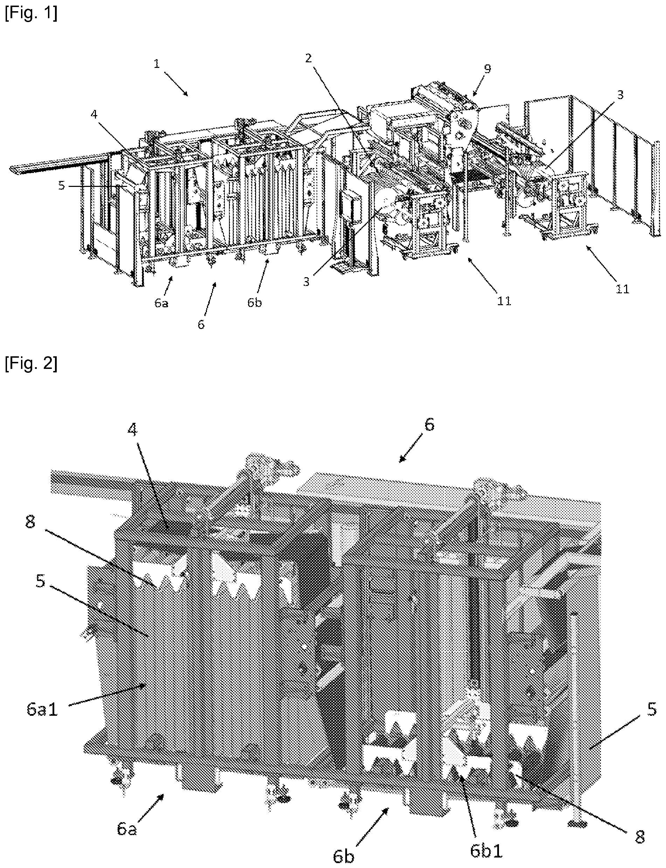

En référence à la figure 1, l'invention concerne un procédé et une installation (1) d'enroulage en continu de bandelettes de gomme (2), notamment utilisées dans la fabrication d'un pneumatique. L'enroulage des bandelettes de gomme (2) est effectué autour de supports, notamment du type manchon ou mandrin, dont la largeur correspond à la largeur de la bandelette de gomme (2), par exemple de 10 mm à 200 mm. Les bandelettes de gomme (2) sont enroulées sur elles-mêmes de manière à former des galettes de gomme (3).

En référence à la figure 1, l'invention permet de former des galettes (3), en continu, à partir d'une nappe (4) de gomme extraite en continu d'une extrudeuse (non représentée). En pratique, une extrudeuse permet de fabriquer en continu une nappe (4) de gomme de 1600 mm de large par exemple.

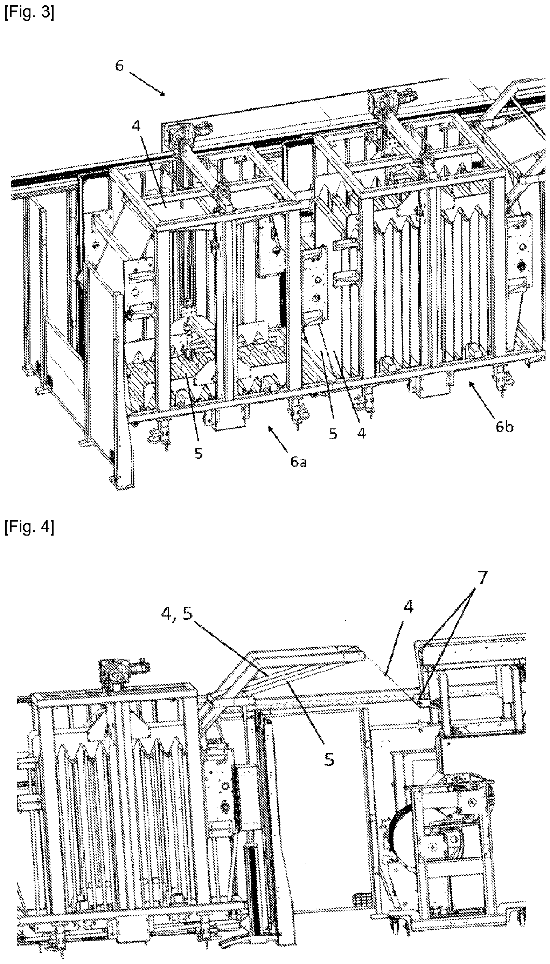

En référence aux figures 2 et 3, en sortie d'extrudeuse, la nappe (4) de gomme est déposée sur une bande transporteuse (5) qui circule en boucle fermée dans un accumulateur (6).

L'accumulateur (6) comprend une première zone (6a) d'accumulation/déchargement de la bande transporteuse (5) seule, et une deuxième zone (6b) de déchargement/accumulation de la bande transporteuse (5) recevant la nappe (4).

Les première et deuxième zones (6a, 6b) sont dépendantes l'une de l'autre. Notamment, étant donné que la bande transporteuse (5) circule en boucle fermée, l'accumulation de la bande transporteuse (5) dans la première zone (6a) entraine le déchargement de la bande transporteuse (5) dans la deuxième zone (6b). Par accumulation, on entend que la longueur de passage de la bande transporteuse (5) et/ou de la nappe (4) dans la zone correspondante est augmentée. Par déchargement, on entend le contraire de l'accumulation, c'est-à-dire que la longueur de passage de la bande transporteuse (5) et/ou de la nappe (4) dans la zone correspondante est réduite.

Conformément aux figures 2 à 4, la nappe (4) de gomme est déposée sur la bande transporteuse (5) visible en partie supérieure de la première zone (6a), puis l'ensemble constitué de la nappe (4) et de bande transporteuse (5) est acheminé vers le bas et passe dans une portion en accordéon (6b1) de la deuxième zone (6b), puis remonte en partie supérieure où la nappe (4) est séparée de la bande transporteuse (5) et déposée sur des rouleaux de transitique motorisés (7), voir figure 4.

La bande transporteuse (5) seule repart vers le bas, sous la deuxième zone (6b) pour passer dans une portion en accordéon (6a1) de la première zone (6a) et fermer la boucle.

Pour l'accumulation ou le déchargement, des rouleaux mobiles (8) des portions en accordéon (6a1, 6b1) sont déplacés pour augmenter ou réduire la longueur de passage entre lesdits rouleaux.

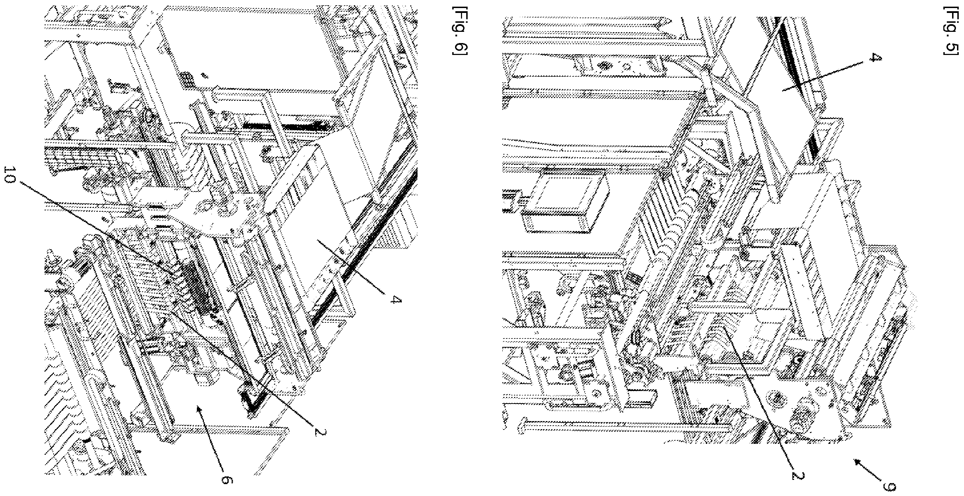

En référence aux figures 5 et 6, en sortie d'accumulateur (6), la nappe (4) de gomme seule, déposée sur des rouleaux de transitique motorisés, est dirigé vers un module de découpe (9) comprenant une pluralité de lames de coupe (10) disposées pour découper longitudinalement la nappe (4) de gomme, dans sa largeur, afin de former une pluralité de bandelettes de gomme (2). Le module de découpe (9) est bien connu de l'état la technique et ne sera pas décrit plus en détail.

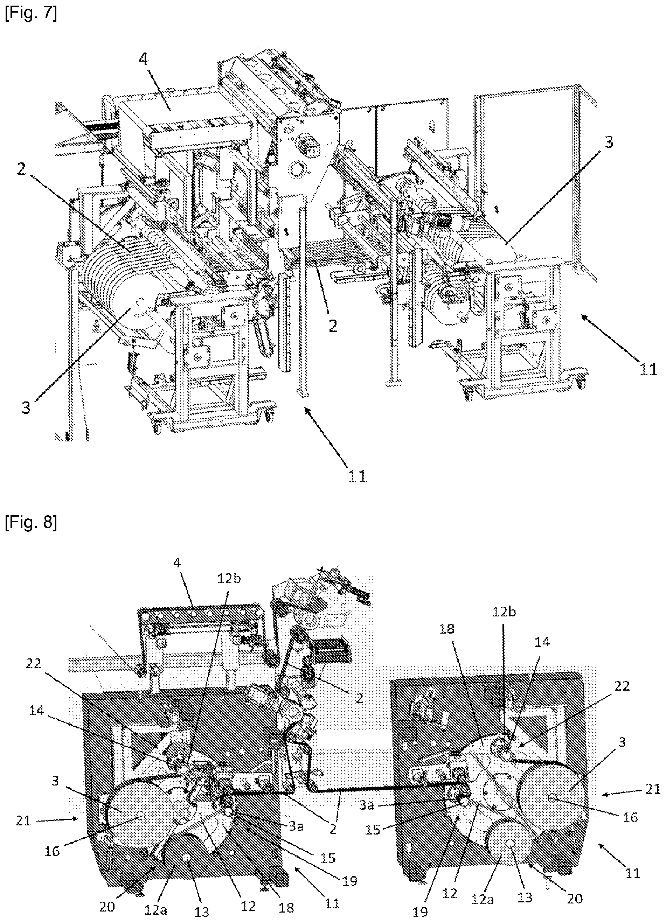

En référence aux figures 7 et 8, en sortie du module de découpe (9), les bandelettes de gomme (2) sont acheminées vers un module d'enroulage (11) pour enrouler chaque bandelette autour d'un support et former des galettes de gomme (3).

Selon l'invention, les bandelettes de gomme (2) sont chacune enroulée avec une bandelette de film support (12), appelé liner, pour former une galette de gomme (3). Par galettes de gomme (3), on entend donc l'enroulage des bandelettes de gomme (2) et des bandelettes de liner (12).

Ainsi, lors du déroulage des bandelettes de gomme (2), le liner (12) permet d'éviter que la bandelette (2) ne colle et d'éviter sa détérioration.

Selon le mode de réalisation illustré, l'installation (1) comprend deux modules d'enroulage (11) des bandelettes de gomme (2), positionnés en parallèle.

Chaque module d'enroulage (11) comprend des barres de dévidage (13, 14) de galettes de bandelettes de film support (12), et une pluralité de supports montés sur des barres (15, 16) entrainées en rotation et autour desquels les bandelettes de gomme (2) positionnées sur les bandelettes de film support (12) sont enroulées ensemble pour former les galettes de gomme (3).

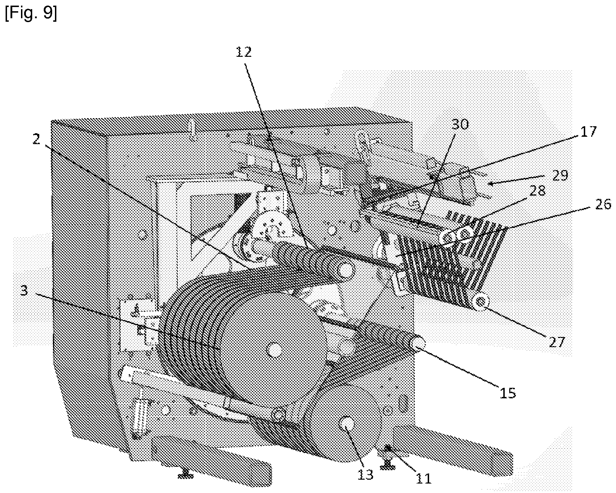

En référence à la figure 9, chaque module (11) comprend également une lame (17) de coupe transversale des bandelettes de gomme (2) en amont des galettes de gomme (3) formées, et des moyens d'approvisionnement de supports vides (3a) et d'enroulage des bandelettes de gomme (2) et des bandelettes de film support (12) découpées autour desdits supports vides (3a).

L'approvisionnement de supports vides (3a) peut être réalisé manuellement, mais de préférence, les moyens d'approvisionnement de supports vides (3a) sont automatiques. Les moyens d'approvisionnement et d'enroulage autour desdits supports vides (3a) des bandelettes de gomme découpées et des bandelettes de film support comprennent un flasque (18) rotatif duquel font saillie quatre barres (13, 14, 15, 16) régulièrement réparties autour du flasque (18).

Afin de pouvoir, d'une part, approvisionner des supports vides (3a) pour l'enroulage de nouvelles galettes de gomme (3), ou des galettes pleine (12a) de liner (12), et d'autre part, évacuer les supports vides (12b) de liner (12) et les galettes de gomme (3) pleine, le flasque (18) est apte à être entraîné en rotation pour faire pivoter les barres (13, 14, 15, 16) de sorte à positionner successivement :
- devant un poste d'enroulage (19), une première barre (15) sur laquelle sont destinées à s'enrouler des bandelettes de gomme (2) positionnées sur des bandelettes de film support (12) ;
- devant un poste de déroulage (20), une deuxième barre (13) recevant des galettes (12a) de bandelettes de film support (12) ;
- devant un premier poste d'évacuation/chargement (21), une troisième barre (16) sur laquelle sont enroulées des galettes (3) de bandelettes de gomme (2) positionnées sur des bandelettes de film support (12) pour évacuation et remplacement par des supports vides (3a) ;
- devant un deuxième poste d'évacuation /chargement (22), une quatrième barre (14) recevant des supports vides (12b) pour évacuation et remplacement par des galettes (12a) de bandelettes de film support (12).

En pratique, et d'une manière connue, des moteurs permettent d'entraîner en rotation les barres (13, 14, 15, 16).

Les supports vides (3a) destiné à recevoir des bandelettes de gomme (2) sont reliés aux bandelettes de gomme (2) et aux bandelettes de film support (12) pour l'enroulage et la formation des galettes (3). Les supports sont par exemple emmanchés fixement autour des barres (13, 14).

En pratique, et en référence à la figure 8, les supports de l'une des barres (15) sont rattachés à l'extrémité des bandelettes de gomme (2) provenant de l'extrudeuse et des bandelettes de film support (12) provenant des galettes (12a) de bandelettes de film support (12), et sont entraînés en rotation, à une vitesse initiale, par l'intermédiaire de la barre (15) qui les supporte. De cette manière, l'enroulage des bandelettes de gomme (2) et de film support (12) autour des supports permet de former des galettes de gomme (3).

Lorsque les galettes de gomme (3) sont pratiquement formées, c'est-à-dire qu'elles ont atteint un diamètre souhaité, le flasque (18) du module d'enroulage (11) est entraîné en rotation, par exemple dans le mode de réalisation illustré, de 180° dans le sens antihoraire.

Ainsi, par exemple lorsque la première barre (15) est pleine de galettes de gomme (3), avec liner (12), l'enroulage et le défilement des bandelettes sont stoppés, et l'accumulateur (6) est actionné afin que la portion de la bande transporteuse (5) sur laquelle est déposée la nappe (4) de gomme s'y accumule, notamment dans la deuxième zone (6b). De manière concomitante, la bande transporteuse (5) accumulée dans la première zone (6a) de l'accumulateur (6) est déchargée. De cette manière, l'extrudeuse reste en fonctionnement et la fabrication de la nappe (4) est toujours continue. En pratique, l'accumulateur (6) permet d'accumuler la nappe (4) de gomme pendant environ 1 min par exemple, c'est-à-dire qu'il peut accumuler environ 50 m de nappe (4).

Pendant que la nappe (4) et la bande transporteuse (5) s'accumulent dans l'accumulateur (6), le module d'enroulage (11) réalise une découpe transversale des bandelettes de gomme (2) en amont des galettes, et rattache automatiquement l'extrémité auxdits supports vides (3a) des bandelettes de gomme (2) provenant de l'extrudeuse et, simultanément, termine l'enroulage de l'extrémité libre des bandelettes de gomme découpées (2) et des bandelettes de film support (12) libérées de leur support vide autour des galettes (3), évacue automatiquement les galettes (3) formées, et redémarre l'enroulage de chacune des bandelettes de gomme (2) et de film support (12) autour des supports vides (3a) à une vitesse supérieure à la vitesse initiale jusqu'à décharger complètement la bande transporteuse (5) et la nappe (4) de gomme dans la deuxième zone (6b) de l'accumulateur (6), et de manière concomitante jusqu'à accumuler la bande transporteuse (5) seule dans la première zone (6a), puis reprend l'enroulage à la vitesse initiale.

En pratique, les bandelettes de film support (12) sont plus longues que les bandelettes de gomme (2) de sorte qu'en finissant l'enroulage des bandelettes (2, 12), la bandelette de gomme (2) se retrouve protégée sous plusieurs épaisseurs de bandelette de film support (12).

L'approvisionnement des supports vides (3a) et des galettes (12a) pleine de film support (12) peut être effectué en temps masqué pendant l'accumulation de la nappe (4) dans l'accumulateur. Mais de préférence, ledit approvisionnement est réalisé pendant le temps de formation des galettes de gomme (3), ce qui laisse plus de temps en pratique. Après avoir approvisionné des galettes (12a) pleines de bandelettes de film support (12), les bandelettes de film support (12) sont attachées sur les supports vides (3a) destinés à recevoir les galettes de gomme (3), notamment pendant le temps de formation des galettes de gomme (3)

Pour la découpe transversale en tant que telle des bandelettes de gomme (2), un bras (26) monté pivotant duquel font saillies des rouleaux de transitique (27, 28) des bandelettes de gomme (2) est pivoté pour positionner les bandelettes de gomme (2) au niveau d'un système de coupe (29).

La figure 9 illustre le bras (26) pivoté et les bandelettes positionnées sous la lame (17) mobile transversalement pour réaliser la découpe. La découpe est réalisée en contre appui contre un support (30) positionné à proximité de l'un des rouleaux de transitique (28).

Lorsque les bandelettes de gomme (2) sont découpées, la barre (16) qui supporte les galettes pratiquement formées, est entraînée en rotation pour finir l'enroulage de l'extrémité des bandelettes (2, 12) autour desdites galettes (3), en combinaison avec un rouleau d'appui qui permet de plaquer l'extrémité libre desdites bandelettes sur les galettes.

La barre (15) qui supporte lesdits supports vides (3a) est entraînée en rotation pour démarrer l'enroulage en tant que tel pour la formation de nouvelles galettes (3).

L'enroulage des bandelettes autour des nouveaux supports (3a) est réalisé à une vitesse supérieure à la vitesse initiale, pour décharger complètement l'accumulateur (6) de la bande transporteuse (5) avec nappe (4) de gomme qui s'était accumulée dans la deuxième zone (6b). Lorsque la deuxième zone (6b) de l'accumulateur (6) déchargée, et concomitamment la première zone (6a) accumulée avec une portion de bande transporteuse (5), l'enroulage des bandelettes est repris à la vitesse initiale.

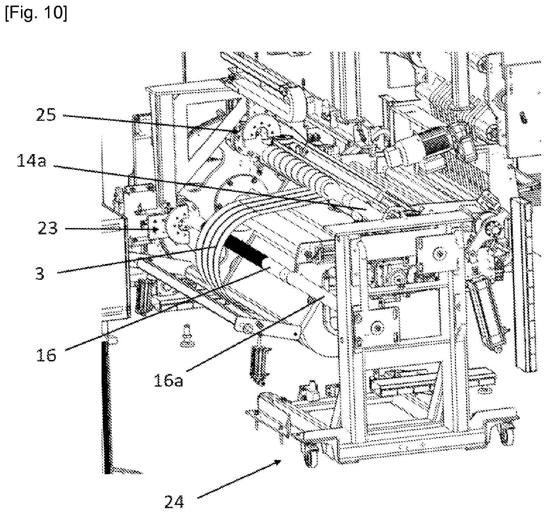

En parallèle et en référence à la figure 10, les galettes formées (3) sont évacuées, par exemple par un dispositif poussoir (23) qui pousse les galettes sur une barre (16a) d'un chariot d'évacuation (24), et sont remplacées par des supports vides (3a), par exemple de manière automatique par un manipulateur.

Un dispositif poussoir (25) est aussi installé pour pousser et évacuer les supports vides (12b) de liner (12) sur une barre (14a) du chariot d'évacuation (24), lesquels sont remplacés par des galettes (12a) pleines de liner (12), par exemple de manière automatique par un manipulateur.

En pratique, l'installation (1) comprend des capteurs qui détectent que les galettes (3) sont formées, c'est-à-dire qu'elles ont atteint le diamètre désiré. Ces capteurs sont assujettis à la rotation des flasques (18), et à la rotation des barres (15, 16) recevant les supports. La vitesse de rotation des barres (15, 16) est également assujettie à l'accumulateur (6) de sorte que lorsque la rotation des supports (3a) est arrêtée ou ralentie, la nappe (4) s'accumule automatiquement dans la deuxième zone (6b) de l'accumulateur (6), et de manière simultanée la bande transporteuse (5) se décharge de la première zone (6a) et, lorsque l'enroulage des nouvelles galettes débute, la vitesse de rotation de la barre correspondante est accélérée pour décharger la deuxième zone (6b) de l'accumulateur (6) de la nappe (4) accumulée, et accumuler simultanément de la bande transporteuse (5) dans la première zone (6a), puis est ralentie jusqu'à la vitesse initiale.

L'installation (1) permet donc d'enrouler automatiquement des bandelettes de gomme (2) avec film support (12) autour de supports (3a), pour former des galettes (3), en continu. L'extrudeuse ne nécessite aucun arrêt. L'évacuation des galettes (3) formées et des supports vides (12b) de film support (12) est de préférence automatique, ainsi que l'approvisionnement de supports vides (3a) pour galettes de gomme (3) et de galettes (12a) pleines de film support (12). Il en est de même pour l'opération de découpe des bandelettes de gomme pour libérer les galettes, et pour l'opération qui consiste à rattacher aux supports vides (3a) l'extrémité des bandelettes de gomme découpées provenant l'extrudeuse, et des bandelettes de film support (12) provenant de galettes pleine (12a).

## Revendications

1. Procédé d'enroulage en continu de bandelettes de gomme (2), notamment utilisées dans la fabrication d'un pneumatique, pour former des galettes de gomme (3), à partir d'une nappe (4) de gomme extraite en continu d'une extrudeuse, le procédé comprenant des étapes consistant à :
- déposer en continu la nappe (4) en sortie d'extrudeuse sur une bande transporteuse (5) circulant en boucle fermé dans un accumulateur (6), l'accumulateur (6) comprenant une première zone (6a)
d'accumulation/déchargement de la bande transporteuse (5) seule, et une deuxième zone (6b) de déchargement/accumulation de la bande transporteuse (5) recevant la nappe (4) ;
- en sortie de l'accumulateur (6), découper la nappe (4) dans sa largeur en une pluralité de bandelettes de gomme (2) ;
- dérouler en continu des galettes (12a) de bandelettes de film support (12), de largeurs correspondantes à celles des bandelettes de gomme (2) ;
- positionner chaque bandelette de gomme (2) sur une bandelette de film support (12) et les enrouler ensemble, à une vitesse initiale, autour d'un support (3a) pour former des galettes de gomme (3) ;
- pendant le temps de formation des galettes (3), approvisionner des supports vides (3a) destinés à recevoir des galettes de gomme (3), et approvisionner des galettes (12a) pleines de bandelettes de film support (12) , et attacher les bandelettes de film support (12) sur les supports vides (3a) destinés à recevoir les galettes de gomme (3) ;
- lorsque les galettes de gomme (3) sont terminées, stopper l'enroulage des bandelettes de gomme (2) et des bandelettes de film support (12), décharger la bande transporteuse (5) seule dans la première zone (6a) de l'accumulateur (6), et accumuler simultanément la bande transporteuse (5) recevant la nappe (4) dans la deuxième zone (6b) de l'accumulateur (6) ;
- pendant que la bande transporteuse (5) recevant la nappe (4) s'accumule, découper transversalement les bandelettes de gomme (2) en amont des galettes de gomme (3), et rattacher aux supports vides (3a) les bandelettes de gomme (2) provenant de l'extrudeuse ;
- simultanément, finir l'enroulage de l'extrémité libre des bandelettes de gomme (2) et des bandelettes de film support (12) autour des galettes de gomme (3), évacuer lesdites galettes de gomme (3), et redémarrer l'enroulage de chacune des bandelettes de gomme (2) et des bandelettes de film support (12) autour des supports vides (3a) à une vitesse supérieure à la vitesse initiale jusqu'à décharger la bande transporteuse (5) recevant la nappe (4) dans la deuxième zone (6b) l'accumulateur (6) et accumuler simultanément la bande transporteuse (5) seule dans la première zone (6a) de l'accumulateur (6), puis reprendre l'enroulage à la vitesse initiale.

2. Procédé selon la revendication 1, **caractérisé en ce que** les galettes de gomme (3) sont évacuées et remplacées par des supports vides (3a), automatiquement et par l'intermédiaire d'un manipulateur.

3. Procédé selon la revendication 1, **caractérisé en ce que** lorsque les bandelettes de film support (12) sont découpées transversalement, les galettes vides (12b) de bandelettes de film support (12) sont évacuées automatiquement et remplacées par des nouvelles galettes (12a) pleines de film support (12).

4. Installation (1) d'enroulage en continu de bandelettes de gomme (2), notamment utilisées dans la fabrication d'un pneumatique, pour former des galettes de gomme (3), à partir d'une nappe (4) de gomme extraite en continu d'une extrudeuse, l'installation (1) comprenant successivement :
- un accumulateur (6) à bande transporteuse (5) circulant en boucle fermée au travers duquel la nappe (4) est destinée à défiler en continu en sortie de l'extrudeuse, l'accumulateur (6) comprenant une première zone (6a) d'accumulation/déchargement de la bande transporteuse (5) seule, et une deuxième zone (6b) de déchargement/accumulation de la bande transporteuse (5) recevant la nappe (4) ;
- un module de découpe (9) comprenant des moyens de coupe (10) de la nappe (4) dans sa largeur et en une pluralité de bandelettes de gomme (2) ;
- un module d'enroulage (11) des bandelettes comprenant :
* des barres (13, 14) de dévidage de galettes (12a) de bandelettes de film support (12) ;
* une pluralité de supports (3a) montés sur des barres (15, 16) entrainées en rotation et autour desquels les bandelettes de gomme (2) positionnées sur les bandelettes de film support (12) sont enroulées ensemble pour former les galettes de gomme (3) ;
* des capteurs détectant que les galettes de gomme (3) sont formées, assujettis à des moyens d'évacuation (23, 24) des galettes de gomme (3) formées ;
* une lame (17) de coupe transversale des bandelettes de gomme (2) en amont des galettes de gomme (3) formées ;
* des moyens d'approvisionnement de supports vides (3a) et d'enroulage des bandelettes de gomme (2) découpées et des bandelettes de film support (12) autour desdits supports vides (3a) ;
l'installation (1) comprend des moyens pour assujettir la vitesse de rotation des supports pour l'enroulage des bandelettes de gomme (2) et des bandelettes de film support (12) à l'accumulateur (6) de sorte que lorsque la rotation des supports (3a) est arrêtée ou ralentie, le bande transporteuse (5) seule est déchargée dans la première zone (6a) de l'accumulateur (6) et la bande transporteuse (5) recevant la nappe (4) s'accumule simultanément dans l'accumulateur (6), et lorsque l'enroulage des nouvelles galettes de gomme (3) débute, la vitesse de rotation est accélérée pour décharger la bande transporteuse (5) recevant la nappe (4) dans la deuxième zone (6b) l'accumulateur (6) et accumuler simultanément la bande transporteuse (5) seule dans la première zone (6a) de l'accumulateur (6), puis est ralentie jusqu'à une vitesse initiale.

5. Installation (1) selon la revendication 4, **caractérisée en ce qu'**elle comprend des moyens d'évacuation (25, 24) et d'approvisionnement automatique de galettes (12a) de bandelettes de film support (12).

6. Installation (1) selon la revendication 5, **caractérisée en ce que** les moyens d'approvisionnement de supports vides et d'enroulage des bandelettes de gomme découpées et des bandelettes de film support autour desdits supports vides (3a) comprennent un flasque (18) rotatif duquel font saillie quatre barres (13, 15, 16) régulièrement réparties autour du flasque (18), le flasque (18) étant apte à être entraîné en rotation pour faire pivoter les barres de sorte à positionner successivement :
- devant un poste d'enroulage (19), une première barre (15) sur laquelle sont destinées à s'enrouler des bandelettes de gomme (2) positionnées sur des bandelettes de film support (12) ;
- devant un poste de déroulage (20), une deuxième barre (13) recevant des galettes (12a) de bandelettes de film support (12) ;
- devant un premier poste d'évacuation/chargement (21), une troisième barre (16) sur laquelle sont enroulées des galettes de bandelettes de gomme (2) positionnées sur des bandelettes de film support (12) pour évacuation et remplacement par des supports vides (3a) ;
- devant un deuxième poste d'évacuation /chargement (22), une quatrième barre (14) recevant des supports vides (12b) pour évacuation et remplacement par des galettes (12a) de bandelettes de film support (12).

## Patentansprüche

1. Kontinuierliches Wickelverfahren für Gummistreifen (2), die insbesondere bei der Herstellung von Reifen verwendet werden, um Gummischeiben (3) aus einem kontinuierlich aus einem Extruder extrahierten Gummiband (4) zu bilden, wobei das Verfahren die folgenden Schritte umfasst:
• Kontinuierliches Ablegen des Gummibands (4) am Ausgang des Extruders auf ein Förderband (5), das in einer geschlossenen Schleife in einem Akkumulator (6) zirkuliert, wobei der Akkumulator (6) eine erste Zone (6a) zum Aufnehmen/Entladen des Förderbands (5) allein und eine zweite Zone (6b) zum Entladen/Aufnehmen des Förderbands (5) umfasst, das das Gummiband (4) erhält;
• Schneiden des Gummibands (4) in seiner Breite in eine Vielzahl von Gummistreifen (2) am Ausgang des Akkumulators (6);
• Kontinuierliches Abrollen von Trägerfolienrollen (12a) mit Breiten, die den Breiten der Gummistreifen (2) entsprechen;
• Positionieren jedes Gummistreifens (2) auf einer Trägerfolie (12) und gemeinsames Wickeln bei einer Anfangsgeschwindigkeit um einen Träger (3a), um Gummischeiben (3) zu bilden;
• Während der Bildung der Gummischeiben (3) leere Träger (3a) bereitstellen, die zur Aufnahme der Gummischeiben (3) bestimmt sind, und volle Trägerfolienrollen (12a) bereitstellen und die Trägerfolien (12) an den leeren Trägern (3a) befestigen, die zur Aufnahme der Gummischeiben (3) bestimmt sind;
• Nach Abschluss der Gummischeiben (3) das Wickeln der Gummistreifen (2) und der Trägerfolien (12) stoppen, das Förderband (5) allein in der ersten Zone (6a) des Akkumulators (6) entladen und gleichzeitig das Förderband (5) mit dem Gummiband (4) in der zweiten Zone (6b) des Akkumulators (6) ansammeln;
• Während das Förderband (5) mit dem Gummiband (4) ansammelt, die Gummistreifen (2) quer vor den Gummischeiben (3) abschneiden und die Gummistreifen (2) aus dem Extruder an den leeren Trägern (3a) befestigen;
• Gleichzeitig das Wickeln des freien Endes der Gummistreifen (2) und der Trägerfolien (12) um die Gummischeiben (3) abschließen, die genannten Gummischeiben (3) evakuieren und das Wickeln jedes der Gummistreifen (2) und der Trägerfolien (12) um die leeren Träger (3a) bei einer höheren Geschwindigkeit als die Anfangsgeschwindigkeit neu starten, bis das Förderband (5) mit dem Gummiband (4) in der zweiten Zone (6b) des Akkumulators (6) entladen wird und gleichzeitig das Förderband (5) allein in der ersten Zone (6a) des Akkumulators (6) ansammelt, dann das Wickeln bei der Anfangsgeschwindigkeit wieder aufnehmen.

2. Verfahren nach Anspruch 1, **dadurch gekennzeichnet, dass** die Gummischeiben (3) automatisch über einen Manipulator evakuiert und durch leere Träger (3a) ersetzt werden.

3. Verfahren nach Anspruch 1, **dadurch gekennzeichnet, dass** beim Querschneiden der Trägerfolien (12) die leeren Rollen (12b) der Trägerfolien (12) automatisch evakuiert und durch neue volle Rollen (12a) der Trägerfolie (12) ersetzt werden.

4. Vorrichtung (1) zum kontinuierlichen Wickeln von Gummistreifen (2), die insbesondere bei der Herstellung von Reifen verwendet werden, um Gummischeiben (3) aus einem kontinuierlich aus einem Extruder extrahierten Gummiband (4) zu bilden, wobei die Vorrichtung (1) nacheinander umfasst:
• Einen Akkumulator (6) mit einem Förderband (5), das in einer geschlossenen Schleife zirkuliert, durch den das Gummiband (4) kontinuierlich am Ausgang des Extruders durchlaufen soll, wobei der Akkumulator (6) eine erste Zone (6a) zum Aufnehmen/Entladen des Förderbands (5) allein und eine zweite Zone (6b) zum Entladen/Aufnehmen des Förderbands (5) umfasst, das das Gummiband (4) erhält;
• Ein Schneidmodul (9) mit Mitteln (10) zum Schneiden des Gummibands (4) in seiner Breite in eine Vielzahl von Gummistreifen (2);
• Ein Wickelmodul (11) für die Streifen, das umfasst:
∘ Stangen (13, 14) zum Abwickeln von Rollen (12a) von Trägerfolienstreifen (12);
∘ Eine Vielzahl von Trägern (3a), die auf Stangen (15, 16) montiert sind, die in Rotation versetzt werden, und um die die Gummistreifen (2), die auf den Trägerfolienstreifen (12) positioniert sind, zusammengewickelt werden, um die Gummischeiben (3) zu bilden;
∘ Sensoren, die detektieren, dass die Gummischeiben (3) gebildet sind, untergeordnet den Mitteln (23, 24) zur Evakuierung der gebildeten Gummischeiben (3);
∘ Eine Klinge (17) zum Querschneiden der Gummistreifen (2) vor den gebildeten Gummischeiben (3);
∘ Mittel zur Bereitstellung leerer Träger (3a) und zum Wickeln der geschnittenen Gummistreifen (2) und der Trägerfolienstreifen (12) um die genannten leeren Träger (3a); die Vorrichtung (1) umfasst Mittel zur Anpassung der Drehgeschwindigkeit der Träger an den Akkumulator (6), so dass, wenn die Drehung der Träger (3a) gestoppt oder verlangsamt wird, das Förderband (5) allein in der ersten Zone (6a) des Akkumulators (6) entladen wird und das Förderband (5), das das Gummiband (4) erhält, gleichzeitig im Akkumulator (6) angesammelt wird, und wenn das Wickeln der neuen Gummischeiben (3) beginnt, wird die Drehgeschwindigkeit erhöht, um das Förderband (5) mit dem Gummiband (4) in der zweiten Zone (6b) des Akkumulators (6) zu entladen und gleichzeitig das Förderband (5) allein in der ersten Zone (6a) des Akkumulators (6) anzusammeln, dann wird sie auf die Anfangsgeschwindigkeit verlangsamt.

5. Vorrichtung (1) nach Anspruch 4, **dadurch gekennzeichnet, dass** sie Mittel (25, 24) zur automatischen Evakuierung und Bereitstellung von Rollen (12a) von Trägerfolienstreifen (12) umfasst.

6. Vorrichtung (1) nach Anspruch 5, **dadurch gekennzeichnet, dass** die Mittel zur Bereitstellung leerer Träger und zum Wickeln der geschnittenen Gummistreifen und Trägerfolienstreifen um die genannten leeren Träger (3a) einen rotierenden Flansch (18) umfassen, aus dem vier Stangen (13, 15, 16) regelmäßig um den Flansch (18) herumragen, wobei der Flansch (18) in Rotation versetzt werden kann, um die Stangen nacheinander zu positionieren:
• Vor einer Wickelstation (19), eine erste Stange (15), auf der die Gummistreifen (2), die auf den Trägerfolienstreifen (12) positioniert sind, gewickelt werden sollen;
• Vor einer Abwickelstation (20), eine zweite Stange (13), die Rollen (12a) von Trägerfolienstreifen (12) erhält;
• Vor einer ersten Evakuierungs-/Ladestation (21), eine dritte Stange (16), auf der die Rollen von Gummistreifen (2), die auf den Trägerfolienstreifen (12) positioniert sind, gewickelt werden, um evakuiert und durch leere Träger (3a) ersetzt zu werden;
• Vor einer zweiten Evakuierungs-/Ladestation (22), eine vierte Stange (14), die leere Träger (12b) zur Evakuierung und zum Ersatz durch Rollen (12a) von Trägerfolienstreifen (12) erhält.

## Claims

1. Continuous winding process for rubber strips (2), particularly used in the manufacturing of tires, to form rubber patties (3) from a rubber sheet (4) continuously extracted from an extruder, the process comprising the following steps:
- Continuously depositing the sheet (4) exiting the extruder onto a conveyor belt (5) circulating in a closed loop within an accumulator (6), the accumulator (6) comprising a first zone (6a) for accumulating/discharging the conveyor belt (5) alone, and a second zone (6b) for discharging/accumulating the conveyor belt (5) receiving the sheet (4);
- Cutting the sheet (4) at its width into a plurality of rubber strips (2) at the exit of the accumulator (6);
- Continuously unrolling support film strip rolls (12a) with widths corresponding to those of the rubber strips (2);
- Positioning each rubber strip (2) onto a support film strip (12) and winding them together, at an initial speed, around a support (3a) to form rubber patties (3);
- During the formation time of the patties (3), supplying empty supports (3a) intended to receive rubber patties (3), and supplying full rolls (12a) of support film strips (12), and attaching the support film strips (12) onto the empty supports (3a) intended to receive the rubber patties (3);
- When the rubber patties (3) are finished, stopping the winding of the rubber strips (2) and the support film strips (12), discharging the conveyor belt (5) alone in the first zone (6a) of the accumulator (6), and simultaneously accumulating the conveyor belt (5) receiving the sheet (4) in the second zone (6b) of the accumulator (6);
- While the conveyor belt (5) receiving the sheet (4) accumulates, transversely cutting the rubber strips (2) upstream of the rubber patties (3), and reattaching the rubber strips (2) coming from the extruder to the empty supports (3a);
- Simultaneously, finishing the winding of the free end of the rubber strips (2) and the support film strips (12) around the rubber patties (3), evacuating said rubber patties (3), and restarting the winding of each of the rubber strips (2) and the support film strips (12) around the empty supports (3a) at a speed higher than the initial speed until the conveyor belt (5) receiving the sheet (4) is discharged in the second zone (6b) of the accumulator (6) and simultaneously accumulating the conveyor belt (5) alone in the first zone (6a) of the accumulator (6), then resuming the winding at the initial speed.

2. The process according to claim 1, **characterized in that** the rubber patties (3) are evacuated and replaced by empty supports (3a) automatically via a manipulator.

3. The process according to claim 1, **characterized in that** when the support film strips (12) are transversely cut, the empty rolls (12b) of support film strips (12) are automatically evacuated and replaced by new full rolls (12a) of support film (12).

4. Installation (1) for continuously winding rubber strips (2), particularly used in the manufacturing of tires, to form rubber patties (3) from a rubber sheet (4) continuously extracted from an extruder, the installation (1) comprising successively:
- An accumulator (6) with a conveyor belt (5) circulating in a closed loop through which the sheet (4) is intended to pass continuously exiting the extruder, the accumulator (6) comprising a first zone (6a) for accumulating/discharging the conveyor belt (5) alone, and a second zone (6b) for discharging/accumulating the conveyor belt (5) receiving the sheet (4);
- A cutting module (9) comprising means (10) for cutting the sheet (4) at its width into a plurality of rubber strips (2);
- A winding module (11) for the strips comprising:
• Bars (13, 14) for unwinding rolls (12a) of support film strips (12);
• A plurality of supports (3a) mounted on bars (15, 16) driven in rotation around which the rubber strips (2) positioned on the support film strips (12) are wound together to form the rubber patties (3);
• Sensors detecting that the rubber patties (3) are formed, subjected to evacuation means (23, 24) of the formed rubber patties (3);
• A blade (17) for transversely cutting the rubber strips (2) upstream of the formed rubber patties (3);
• Means for supplying empty supports (3a) and winding the cut rubber strips (2) and the support film strips (12) around said empty supports (3a); the installation (1) comprises means to subject the rotational speed of the supports to the accumulator (6) so that when the rotation of the supports (3a) is stopped or slowed, the conveyor belt (5) alone is discharged in the first zone (6a) of the accumulator (6) and the conveyor belt (5) receiving the sheet (4) accumulates simultaneously in the accumulator (6), and when the winding of the new rubber patties (3) begins, the rotational speed is increased to discharge the conveyor belt (5) receiving the sheet (4) in the second zone (6b) of the accumulator (6) and simultaneously accumulate the conveyor belt (5) alone in the first zone (6a) of the accumulator (6), then is slowed to an initial speed.

5. The installation (1) according to claim 4, **characterized in that** it comprises means (25, 24) for automatic evacuation and supply of rolls (12a) of support film strips (12).

6. The installation (1) according to claim 5, **characterized in that** the means for supplying empty supports and winding the cut rubber strips and support film strips around said empty supports (3a) comprise a rotary flange (18) from which four bars (13, 15, 16) regularly spaced around the flange (18) protrude, the flange (18) being able to be rotated to successively position:
- In front of a winding station (19), a first bar (15) on which the rubber strips (2) positioned on support film strips (12) are intended to be wound;
- In front of an unwinding station (20), a second bar (13) receiving rolls (12a) of support film strips (12);
- In front of a first evacuation/loading station (21), a third bar (16) on which rolls of rubber strips (2) positioned on support film strips (12) are wound for evacuation and replacement by empty supports (3a);
- In front of a second evacuation/loading station (22), a fourth bar (14) receiving empty supports (12b) for evacuation and replacement by rolls (12a) of support film strips (12).
